# EUROPÄISCHE PATENTSCHRIFT

(11) **EP 2 203 632 B1**
(45) Veröffentlichungstag und Bekanntmachung des Hinweises auf die Patenterteilung: **06.04.2011**
(21) Anmeldenummer: 08802866.7
(22) Anmeldetag: 11.10.2008
(51) Int. Cl.: F01N 13/14, F01N 13/18, F16L 27/00, F16L 27/11, F16L 51/03

(54) **ABGASLEITUNGSBAUTEIL**
EXHAUST-GAS CONDUCTION COMPONENT
ÉLÉMENT DE TUBULURE D'ÉCHAPPEMENT

(30) Priorität: 02.11.2007 DE 102007052243
(43) Veröffentlichungstag der Anmeldung: 07.07.2010
(73) Patentinhaber: Witzenmann GmbH, 75175 Pforzheim (DE)
(72) Erfinder: WALLE, Bernard, 71282 Hemmingen (DE)
(74) Vertreter: Lemcke, Brommer & Partner
(86) Internationale Anmeldenummer: PCT/EP2008/008614
(87) Internationale Veröffentlichungsnummer: WO 2009/056213

(56) Entgegenhaltungen:
- EP-A- 0 441 625
- DE-A1- 3 544 712
- DE-A1- 4 318 343
- DE-A1- 19 604 367
- DE-C1- 19 722 603

## Beschreibung

Die Erfindung betrifft ein als Schwingungsentkoppelelement wirksames Abgasleitungsbauteil nach dem Oberbegriff des Anspruchs 1.

Aus der DE 196 04 367 A1 ist es bekannt, zur Schwingungsentkopplung in einem Kraftfahrzeugabgassystem ein luftstpaltisoliertes Abgasleitungsbauteil einzusetzen, bei welchem das Außenrohr einen Wellrohrabschnitt aufweist. Durch die Ausführung mit einem zum Außenrohr koaxial verlaufenden Innenrohr werden Wärmeverluste gering gehalten, was das Kaltstartverhalten eines nachgeschalteten Katalysators verbessert.

Ein Problem derartiger Bauteile stellt die Dauerhaltbarkeit dar. An Kontaktstellen zwischen Innenrohr und Außenrohr oder zwischen dem Entkoppelelement und angeschlossenen Abgasleitungsteilen oder Bauteilen können Ermüdungsbrüche oder andere unerwünschte Verschleißerscheinungen auftreten.

Aufgabe der Erfindung ist es, ein als Schwingungsentkoppelelement wirksames Abgasleitungsbauteil anzugeben, welches eine hohe Dauerhaltbarkeit aufweist.

Diese Aufgabe wird durch ein Abgasleitungsbauteil mit den Merkmalen des Anspruchs 1 gelöst.

Erfindungsgemäß weist das Abgasleitungsbauteil einen glatt ausgeführten Mittelabschnitt und einen ersten und einen zweiten Wellrohrabschnitt sowie ferner einen jeweils glatt ausgeführten ersten und zweiten Endabschnitt auf. Das Innenrohr ist über eine umlaufende Fügestelle im Bereich des Mittelabschnitts wenigstens punktweise mit dem Außenrohr fest verbunden. Das geradlinig ausgeführte Abgasleitungsbauteil weist dabei erfindungsgemäß einen in Bezug auf seine Mittelquerachse zumindest annähernd achsensymmetrischen Aufbau auf. Das Abgasleitungsbauteil verfügt somit über zwei annähernd gleich ausgebildete Hälften mit jeweils einem als Wellrohr ausgebildeten Abschnitt. Die Wellrohrabschnitte weisen ungefähr gleiche Länge und gleiches Eigenschwingungsverhalten auf und wirken gleichermaßen als Dehnungsausgleicher und Schwingungsentkoppler.

Bei dieser Ausführung ergeben sich gegenüber einer Ausführung mit einem einzigen Entkoppelbereich mit doppelter Länge erhebliche Fertigungsvorteile, insbesondere in Bezug auf die zur Darstellung der Wellrohrabschnitte erforderlichen Werkzeugabmessungen. Ferner ergibt sich ein verbessertes Eigenschwingungsverhalten. Jeder der beiden durch den starren Mittelabschnitt miteinander verbundenen Wellrohrabschnitte ist so ausgelegt, insbesondere so kurz ausgeführt, dass seine Resonanzfrequenz oberhalb der typischerweise von der Brennkraftmaschine ausgehenden Schwingungsanregung liegt. Andererseits ist es ermöglicht, das Abgasleitungsbauteil insgesamt so auszuführen, insbesondere in Bezug auf sein Eigenschwingungsverhalten so tieffrequent auszulegen, dass eingetragene Schwingungsenergie effektiv absorbiert wird. Die erfindungsgemäße Ausführung ermöglicht eine Abstimmung des Schwingungsverhaltens, wie sie bei einem Bauteil gleicher Länge und mit nur einem Wellrohrabschnitt kaum möglich wäre. Infolge des zumindest annähernd über die gesamte Bauteillänge vorhandenen Ringluftspalts zwischen Innenrohr und Außenrohr ist ein Aneinanderreiben von Innenrohr und Außenrohr und somit ein Reibungsverschleiß vermieden. Wegen der typischerweise kleinen mechanischen Anbindungsfläche des Innenrohrs an den starren Mittelabschnitt des Außenrohrs über die Fügestelle ist eine gegenseitige Schwingungsanregung gering. Dennoch beeinflusst der Massenbeitrag des Innenrohrs das Eigenschwingungsverhalten des Gesamtbauteils günstig. Weiterhin ist infolge der geringen vorzugsweise ringförmigen Kontaktfläche zwischen Innenrohr und Außenrohr der Wärmeübergang vermindert und somit das Isolationsverhalten des Abgasleitungsbauteils weiter verbessert.

In Ausgestaltung der Erfindung sind der erste Wellrohrabschnitt und/oder der zweite Wellrohrabschnitt als Wickelschlauch mit Wellenprofil ausgebildet. Diese Ausführungsform ermöglicht in gewissem Umfang einen axialen Parallelversatz der sich beiderseits an den Mittelabschnitt anschließenden Außenrohrteile. Bevorzugt sind die Wellrohrabschnitte jeweils als Wickelfalzrohr ausgebildet, der eine gewisse Krümmung, Verdrehung bzw. axiale Bewegung ermöglicht.

In einer bevorzugten weiteren Ausgestaltung der Erfindung sind der erste Wellrohrabschnitt und der zweite Wellrohrabschnitt gegensinnig gewickelt ausgeführt. Dies erhöht den Torsionsspielraum.

In weiterer Ausgestaltung der Erfindung ist der Mittelabschnitt formstabil ausgeführt. Dies verleiht dem Außenrohr die nötige mechanische Stabilität.

In weiterer Ausgestaltung der Erfindung ist das Innenrohr als biegsamer und in Längsrichtung flexibler Metallschlauch ausgebildet, der über eine umlaufende Fügestelle jeweils im Endbereich der Endabschnitte wenigstens punktweise mit dem Außenrohr fest verbunden ist und mit Ausnahme der an den Fügestellen vorgesehenen Verbindungen mit dem Außenrohr berührungsfrei zum Außenrohr angeordnet ist. Somit besteht eine feste, über eine Umfangslinie des Innenrohrs verlaufende Verbindung desselben mit dem Außenrohr an den Enden und in der Mitte des Außenrohrs. In den zwischen den Befestigungsstellen befindlichen Leitungsabschnitten liegt ein durchgehender Luftspalt zwischen Innerohr und Außenrohr vor. Eine Durchströmbarkeit des Luftspalts ist infolge der umfangsseitig umlaufenden Fügestellen weitestgehend oder vollständig vermieden. Dadurch ergibt sich eine besonders wirksame Wärmeisolation. Infolge der biegsamen und in Längsrichtung flexiblen Ausführung des Innenrohrs kann dieses Schwingungsdehnungen des Außenrohrs folgen und es werden Spannungen zwischen Innenrohr und Außenrohr vermieden. Andererseits ist das Innenrohr keinen starken mechanischen Beanspruchungen ausgesetzt, da die Anbindung des Abgasleitungsbauteils an die angeschlossenen Bauteile über die vorzugsweise als Anschweißstutzen ausgebildeten Endabschnitte des Außenrohrs erfolgt. Vorzugsweise ist das Innenrohr als Wickelfalzrohr oder als Agraffschlauch ausgebildet.

In weiterer Ausgestaltung der Erfindung ist das Innenrohr formstabil und glatt ausgebildet und über den überwiegenden Teil seiner Längsausdehnung berührungsfrei zum Außenrohr angeordnet. Es ist vorzugsweise vorgesehen, dass das Innenrohr lediglich im Bereich des Mittelabschnitts mit dem Außenrohr fest verbunden ist. Vom Außenrohr auf das Innenrohr erfolgende Schwingungsanregungen sind dadurch vermindert. An den Endabschnitten kann jeweils ein Schiebesitz oder eine ähnliche Dichtverbindung vorgesehen sein, welche eine Relativbewegung zwischen Außenrohr und Innenrohr erlaubt. Für das Innenrohr ist damit ein zumindest annähernd reibungsfreies Bewegungsspiel gegenüber dem Außenrohr gegeben. Dadurch sind mechanische Spannungen zwischen Außenrohr und Innenrohr vermieden. Infolge seiner formstabilen bzw. starren Ausführung tritt bei Wärmedehnungen oder Schwingungsanregung keine oder lediglich eine zu vernachlässigende innere Reibung auf. Die mechanische Beanspruchung des Innenrohrs ist daher stark vermindert und die Dauerhaltbarkeit entsprechend erhöht. Infolge des über nahezu die gesamte Längsausdehnung vorgesehenen Luftspalts ist eine gute Wärmeisolation gewährleistet.

In weiterer Ausgestaltung der Erfindung ist das Innenrohr einstückig ausgebildet. Durch den Verzicht auf feste Fügestellen innerhalb des Innenrohrs ist die Verschleißfestigkeit und die Dauerhaltbarkeit weiter verbessert.

In weiterer Ausgestaltung der Erfindung ist das Außenrohr einstückig oder zweiteilig mit einer im Bereich der Mittelquerachse verlaufenden lösbaren Trennstelle ausgebildet. Eine einstückige Ausführung des Außenrohrs verbessert die Verschleißfestigkeit und die Dauerhaltbarkeit. Jedoch ergeben sich ab einer bestimmten Länge Fertigungsschwierigkeiten. Für längere Ausführungen ist daher eine zweiteilige Ausführung vorgesehen, wobei die beiden Teile im Mittelabschnitt beispielsweise über eine Schellenverbindung, vorzugsweise in abdichtender Ausführungsform, fest miteinander verbunden sind.

In einer weiteren vorteilhaften Ausführungsform ist vorgesehen, dass die Fügestelle als im Wesentlichen durchgehende Schweißnaht ausgebildet ist. Für eine gute Festigkeit der Fügestelle zwischen Innenrohr und Außenrohr ist eine durchgehend und ununterbrochen entlang einer Umfangslinie des Innenrohrs verlaufende Schweißnaht vorteilhaft. Es können jedoch auch eine Vielzahl aneinander gereihter Punktschweißungen entlang einer Umfangslinie vorgesehen sein. Je nach Ausführungsform des Innenrohrs sind diese lediglich im Bereich des Mittelabschnitts oder zusätzlich endseitig an den Endabschnitten vorgesehen.

In einer weiteren vorteilhaften Ausführungsform weist das Abgasleitungsbauteil eine an der Fügestelle mittels Clinchtechnik, Durchsetztechnik, Niettechnik oder nach dem Taumelpressverfahren erzielte form- und/oder kraftschlüssige Verbindung auf. Diese Fügetechniken konnten als besonders dauerhaltbar identifiziert werden. Im Vergleich zu einer Schweißverbindung können sich Fertigungsvorteile ergeben und in Bezug auf Zuverlässigkeit verbesserte Ergebnisse erzielt werden. Je nach Ausführungsform des Innenrohrs sind die so ausgeführten Fügestellen lediglich im Bereich des Mittelabschnitts oder zusätzlich endseitig an den Endabschnitten vorgesehen.

In einer besonders vorteilhaften Ausführungsform weist das Abgasleitungsbauteil eine außerhalb eines Bereichs von 30 Hz bis 100 Hz liegende Resonanzfrequenz gegenüber mechanisch angeregten Schwingungen auf. Diese Auslegung hat sich als besonders dauerhaltbar erwiesen. Im Schwingungsspektrum in diesem Frequenzbereich auftretende Motorschwingungen höherer Ordnung sind dadurch wirkungsvoll gedämpft und es ist eine besonders wirksame Schwingungsentkopplung gegeben. Vorzugsweise ist das Abgasleitungsbauteil so ausgeführt und abgestimmt, dass seine Eigenfrequenzen bzw. Resonanzstellen oberhalb des Schwingungsbereichs von 30 Hz bis 100 Hz liegen.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: eine erste vorteilhafte Ausführungsform des erfindungsgemäßen Abgasleitungsbauteils,
- Fig. 2: eine zweite vorteilhafte Ausführungsform des erfindungsgemäßen Abgasleitungsbauteils und
- Fig. 3a - 3c: vorteilhafte Ausführungsformen einer Fügestelle zur festen Verbindung von Außenrohr und Innenrohr eines Abgasleitungsbauteils gemäß Fig. 1 oder Fig. 2.

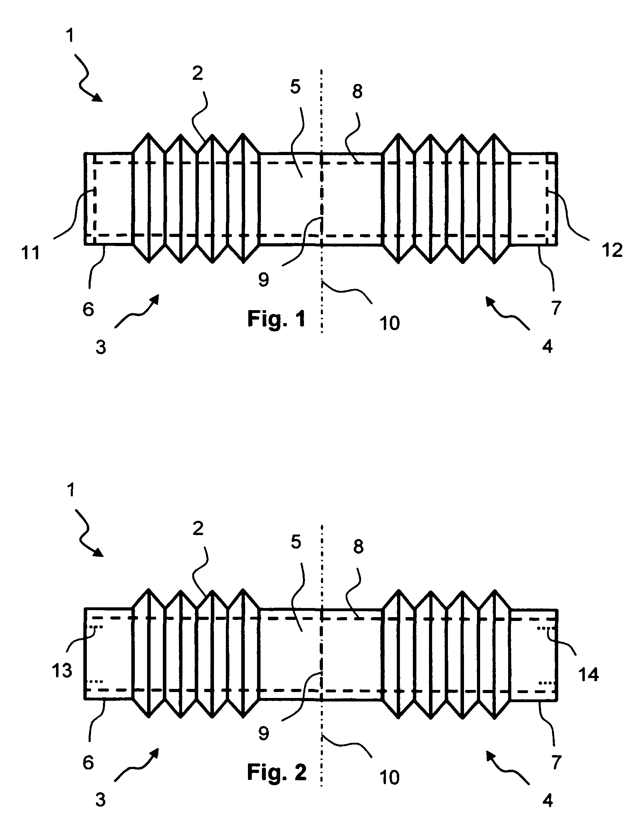

Das in Fig. 1 schematisch dargestellte Abgasleitungsbauteil ist zum Einsatz als Schwingungsentkoppelelement im Abgassystem zur Führung von Abgasen einer Kraftfahrzeug-Brennkraftmaschine, insbesondere eines Nutzfahrzeugs vorgesehen. Bevorzugt kommt es als Rohrverbindungselement zwischen der Turbine eines Abgasturboladers und einem Gehäuse einer Abgasnachbehandlungseinrichtung zum Einsatz. Durch den Einsatz des nachfolgend näher beschriebenen erfindungsgemäßen Abgasleitungsleitungsbauteils 1 wird eine Übertragung von von der vorzugsweise federnd gelagerten Brennkraftmaschine ausgehenden mechanischen Schwingungen auf die vorzugsweise starr mit einem Fahrzeugrahmen verbundene Abgasnachbehandlungseinrichtung vermieden.

Das Abgasleitungsbauteil 1 weist in Bezug auf eine Mittelquerachse 10 einen symmetrischen Aufbau mit einem Außenrohr 2 und einem Innenrohr 8 mit jeweils kreisrundem Querschnitt auf. Das Außenrohr 2 weist einen ersten Endabschnitt 6, einen zweiten Endabschnitt 7 und einen Mittelabschnitt 5 auf, welche jeweils als glatte und starre Rohrabschnitte ausgeführt sind. Die Endabschnitte 6, 7 dienen dabei als Anschweißstücke zur Verbindung mit dem vorgeschalteten bzw. nachgeschalteten Bauteil. Endseitige Flansche können zur Verbindung ebenfalls vorgesehen sein. Zum Ausgleich von Dehnungen und zur Schwingungsabsorption bzw. Schwingungsentkopplung sind ein erster Wellrohrabschnitt 3 und ein zweiter Wellrohrabschnitt 4 vorgesehen, welche vorzugsweise gleich ausgeführt und symmetrisch zur Mittelquerachse 10 zwischen dem Mittelabschnitt 5 und dem jeweiligen Endabschnitt 6, 7 angeordnet sind.

Das Außenrohr 2 ist bevorzugt gasdicht oder zumindest annähernd gasdicht mit geringer Leckrate ausgeführt. Insbesondere ist vorzugsweise vorgesehen, zumindest den Mittelabschnitt 5 als Rohrstück bestehend aus einem Material mit mikroskopisch geschlossenem Materialverbund auszuführen.

Die Wellrohrabschnitte 3, 4 verleihen dem Außenrohr 2 eine Elastizität zumindest in axialer Richtung, wodurch Schwingungsbewegungen ausgeglichen werden können. Sind die Wellrohrabschnitte 3, 4 als Wickelschlauch mit Wellenprofil ausgebildet, so ergibt sich für das Außenrohr eine Verdrehbarkeit, wodurch auch Torsionsbewegungungen oder - Schwingungen ausgeglichen werden können. Insbesondere bei einer bevorzugten Ausführung der Wellrohrabschnitte 3, 4 ist auch ein axialer Parallelversatz von beiderseits an das Abgasleitungsbauteil 1 angeschlossenen Baugruppen ermöglicht. Die Wellrohrabschnitte 3, 4 können jedoch auch aus einem Rohrmaterial mit mikroskopisch in sich geschlossenem Materialverbund ausgeführt sein. Dadurch wird eine völlige Gasdichtheit des Außenrohrs 2 erreicht.

Um der Forderung nach geringen Wärmeverlusten Rechnung zu tragen, ist das Abgasleitungsbauteil als Luftspalt isolierte Doppelleitung mit einem Außenrohr 2 und einem Innenrohr 8 ausgeführt. Das Innenrohr 8 erstreckt sich über die gesamte Länge des Abgasleitungsbauteils 1, wobei das Innenrohr 8 annähernd bündig zum Außenrohr 2 am jeweiligen Endabschnitt 6, 7 endet. Das Innenrohr 8 ist, abgesehen von Fügestellen 9, 11, 12, berührungsfrei und mit einem Ringspalt koaxial zum Außenrohr 2 angeordnet. An den Fügestellen 9, 11, 12 ist das Innenrohr 8 entlang einer Umfangslinie fest mit dem Außenrohr 2 verbunden. Dabei ist eine Fügestelle 9 annähernd mittig und zwei weitere Fügestellen 11, 12 sind jeweils endseitig vorgesehen. Die Fügestellen sind beispielsweise als ununterbrochene umlaufende Schweißnähte ausgebildet. Es können jedoch auch andere Arten von Fügetechniken eingesetzt werden, worauf weiter unten näher eingegangen wird. Infolge der beschriebenen Ausführungsform ergibt sich in jeder Hälfte des Abgasleitungsbauteils 1 ein vom jeweiligen Endbereich bis zur Mitte durchgehender Ringluftspalt, welcher eine Wärmeübertragung vom Inneren des Abgasleitungsbauteils 1 an das Außenrohr 2 und damit eine Wärmeabgabe an die Umgebung in hohem Maße unterbindet. Da an den Fügestellen 9, 11, 12 im Vergleich zu den Gesamtabmessungen lediglich eine kleine Kontaktzone zwischen Innenrohr 8 und Außenrohr 2 vorhanden ist, sind auch die Wärmeverluste durch Wärmeableitung zum Außenrohr 2 gering.

Um Dehn-, Schwingungs- oder Biegebewegungen des Außenrohrs 2 folgen zu können, ist das Innenrohr 8 als biegsames und in Bezug auf axiale Längenänderungen flexibles Rohrleitungsbauteil ausgebildet. Besonders bevorzugt ist eine Ausführung als Wickelfalzrohr bzw. als so genannter Agraffschlauch.

Mit der beschriebenen erfindungsgemäßen Ausführungsform gemäß Fig. 1 wird ein Schwingungsentkoppelelement mit hoher Dauerhaltbarkeit erhalten. Insbesondere infolge der weitestgehenden Entkopplung des Innenrohrs 8 vom Außenrohr 2 lässt sich eine hohe Dauerhaltbarkeit mit Laufzeiten von mehreren hunderttausend Kilometern erreichen. In vielen Anwendungsfällen ist die Dauerhaltbarkeit jedoch durch innere Reibung des Innenrohrs 8 begrenzt. Diese resultiert durch zum Außenrohr 2 parallele Längenänderungen, welche ein Aneinanderreiben sich berührender Windungslagen des als Wickel- oder Agraffschlauch ausgeführten Innenrohrs 8 zur Folge haben. Mit der nachfolgend anhand der Fig. 2 erläuterten Ausführungsform lassen sich diese Nachteile vermeiden und die Dauerhaltbarkeit weiter verbessern.

Fig. 2 zeigt eine bevorzugte Ausführungsform eines als Schwingungsentkoppelelement wirksamen Abgasleitungsbauteils 1, welches in Bezug auf Symmetrieeigenschaften und die Ausführung des Außenrohrs 2 analog wie das in Fig. 1 dargestellte Abgasleitungsbauteil ausgeführt ist. Nachfolgend wird auf die wesentlichen Unterschiede eingegangen.

Speziell ist das Innenrohr 8 des Abgasleitungsbauteils gemäß Fig. 2 als starres, formstabiles und glattes Rohrstück ausgebildet. Als Befestigung des Innenrohrs 8 mit dem Außenrohr 2 ist lediglich eine Fügestelle im Mittelabschnitt 5 vorgesehen. Diese kann analog zu den im Zusammenhang mit Fig. 1 genannten Fügestellen ausgeführt sein. Ein direkter Kontakt zwischen Innenrohr 8 und Außenrohr 2 ist ansonsten nicht vorgesehen. Somit resultiert ebenfalls eine sich praktisch über die gesamte Bauteillänge erstreckende Luftspaltisolierung. Eine als Schiebesitz 13, 14 oder in ähnlicher Form ausgebildete Führung bzw. Lagerung oder Dichtung an den Enden des Abgasleitungsbauteils 1 ermöglicht eine zumindest annähernd reibungsfreie axiale Relativbewegung des Innenrohrs 8 zum Außenrohr 2.

In Bezug auf das Schwingverhalten des Abgasleitungsbauteils 1 wirkt das Innenrohr 8 entsprechend der Ausführung gemäß Fig. 2 hauptsächlich als passiver Schwingungstilger. Dies führt zu einer besonders wirksamen Dämpfung bzw. Abkopplung von auf das Abgasleitungsbauteil 1 übertragenen Schwingungen. Durch Festlegung der Masse des Innenrohrs im Zusammmenhang mit der Masse des Außenrohrs 2 und den Feder- und Dämpfungseigenschaften der Wellrohrabschnitte 3, 4 kann eine Gesamtabstimmung erzielt werden, welche besonders günstige Eigenschaften in Bezug auf die vorherrschenden Bedingungen aufweist. Dabei hat es sich als besonders vorteilhaft erwiesen, eine Gesamtabstimmung vorzusehen, bei welcher eine resonante Anregung im Bereich von etwa 30 Hertz bis etwa 100 Hertz vermieden ist. Es versteht sich, dass dies in gleichem Maß auch für die in Fig. 1 dargestellte Ausführungsform möglich ist.

Eine Anpassung des Eigenschwingverhaltens bzw. des Resonanzverhaltens lässt sich in vorteilhafter Weise auch über eine Dimensionierung der Wellrohrabschnitte 3, 4, insbesondere über deren Länge erzielen. Eine Abstimmung ist jedoch auch über eine Dimensionierung der Wellung möglich. Beispielsweise kann in den Randbereichen der Wellrohrabschnitte 3, 4 eine geringere Amplitude der Wellen vorgesehen sein als in den mittleren Bereichen und/oder es kann eine über die Länge eines Wellrohrabschnitts 3, 4 variable Wellenlänge vorgesehen sein. Auf diese Weise kann durch eine einfache und geringe Änderung der Ausführung bzw. der Fertigungsbedingungen eine Anpassung an unterschiedliche Randbedingungen in Bezug auf die Schwingungssituation erzielt werden.

Mit Blick auf den Fertigungsaufwand kann es vorteilhaft sein, insbesondere das Außenrohr 2 nicht einstückig, sondern zweiteilig auszuführen. Die Verbindungsstelle liegt bevorzugt auf bzw. in unmittelbarer Nähe der Mittelquerachse 10 des Gesamtbauteils 1. Für die beiden Hälften können dann gleiche Bauteile verwendet werden. Es kann eine lösbare Verbindung der beiden Hälften, beispielsweise über eine Rohrschelle oder eine Schweißverbindung vorgesehen sein.

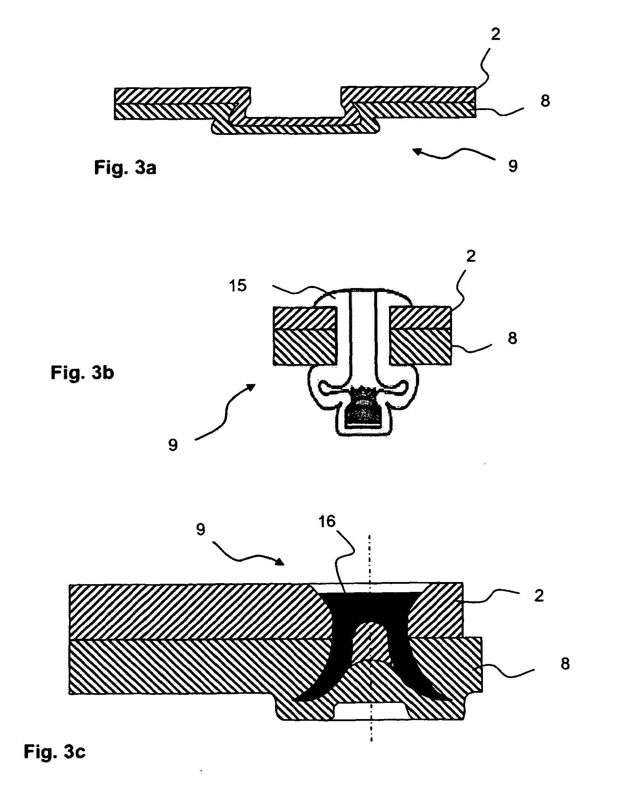

Eine besonders hohe Dauerhaltbarkeit lässt sich für das Abgasreinigungsbauteil nach Fig. 1 oder Fig. 2 erzielen, wenn die Fügestellen 9, 11, 12 unter Einsatz bestimmter mechanischer Fügeverfahren hergestellt werden. Dadurch kann auf hinsichtlich Dauerbelastbarkeit oftmals kritische Schweißverbindungen verzichtet werden. Nachfolgend werden unter Bezug auf die Figuren 3a bis 3c vorteilhafte Fügeverfahren erläutert.

Besonders dauerhaltbar ist eine Verbindung von Außenrohr 2 und Innenrohr 8 an den hierfür vorgesehenen Fügestellen 9, 11, 12 in Form einer Clinchverbindung wie in Fig. 3a schematisch dargestellt. Durch Einwirkung einer Presskraft eines geeigneten Werkzeugs erfolgt eine gemeinsame Verformung der Bleche von Außenrohr 2 und Innenrohr 8 derart, dass sich eine im Querschnitt pilzhutförmige Verwölbung des Außenrohrs 2 in ein entsprechendes Profil des Innenrohrs 8 ergibt. Die resultierende Clinchverbindung ist gasdicht und außerordentlich widerstandsfähig gegenüber Schwingungs-Dauerbeanspruchungen. Die Clinchverbindung kann als ununterbrochene Verbindungslinie oder in Form von punktförmigen Verbindungen entlang einer Umfangslinie von Außenrohr 2 bzw. Innenrohr 8 ausgebildet sein.

Eine feste und dauerhaltbare Fügestelle kann auch über eine in Fig. 3b dargestellte Verbindung mittels Blindnieten 15 erzielt werden, wobei insbesondere gasdichte Typen eingesetzt werden. Mehrere, vorzugsweise mehr als drei Nietverbindungen auf einer Umfangslinie bilden eine Fügestelle 9, 11, 12 zwischen Außenrohr 2 und Innenrohr 8.

Eine weitere vorteilhafte Ausführungsform einer Fügestelle ist die in Fig. 3c dargestellte Verbindung durch Stanznieten 16. Dabei werden ebenfalls mehrere, vorzugsweise mehr als drei Nietverbindungen entlang einer Umfangslinie vorgesehen.

Als weitere, nicht näher erläuterte vorteilhafte Verbindungstechniken zur Herstellung einer Fügestelle 9, 11, 13 für das erfindungsgemäße Abgasleitungsbauteil 1 sind Nietverfahren unter Einsatz von Vollnieten oder Umformverfahren nach dem Taumelpressprinzip. Die genannten zur Schweißverbindungstechnik alternativ einsetzbaren Verbindungstechniken haben den Vorteil über eine Kaltverformung eine zuverlässigere Verbindung zu ermöglichen, wobei sich zusätzlich ein Kostenvorteil bei der Fertigung ergeben kann.

## Patentansprüche

1. Als Schwingungsentkoppelelement wirksames Abgasleitungsbauteil (1) zum Einbau in ein Abgassystem zur Führung von Abgasen einer Kraftfahrzeug-Brennkraftmaschine, mit einem einen Wellrohrabschnitt (3; 4) aufweisenden Außenrohr (2) und einem koaxial zum Außenrohr (2) angeordneten und von diesem durch einen Ringspalt getrennten Innenrohr (8),
**dadurch gekennzeichnet, dass**
das Außenrohr (2)
- einen glatt ausgeführten Mittelabschnitt (5),
- einen ersten Wellrohrabschnitt (3) und zweiten Wellrohrabschnitt (4) sowie
- einen jeweils glatt ausgeführten ersten Endabschnitt (6) und einen zweiten Endabschnitt (7) aufweist und
das Innenrohr (8) über eine umlaufende Fügestelle (9) im Bereich des Mittelabschnitts (5) wenigstens punktweise mit dem Außenrohr (2) fest verbunden ist, wobei das Abgasleitungsbauteil (1) geradlinig ausgeführt ist und in Bezug auf seine Mittelquerachse (10) einen zumindest annähernd achsensymmetrischen Aufbau aufweist.

2. Abgasleitungsbauteil nach Anspruch 1,
**dadurch gekennzeichnet, dass**
der erste Wellrohrabschnitt (3) und/oder der zweite Wellrohrabschnitt (4) als Wickelschlauch mit Wellenprofil ausgebildet sind.

3. Abgasleitungsbauteil nach Anspruch 2,
**dadurch gekennzeichnet, dass**
der erste Wellrohrabschnitt (3) und der zweite Wellrohrabschnitt (4) gegensinnig gewickelt ausgeführt sind.

4. Abgasleitungsbauteil nach einem der Ansprüche 1 bis 3,
**dadurch gekennzeichnet, dass**
der Mittelabschnitt (5) formstabil ausgeführt ist.

5. Abgasleitungsbauteil nach einem der Ansprüche 1 bis 4,
**dadurch gekennzeichnet, dass**
das Innenrohr (8) als biegsamer und in Längsrichtung flexibler Metallschlauch ausgebildet ist, der über eine umlaufende Fügestelle (11; 12) jeweils im Endbereich der Endabschnitte (6, 7) wenigstens punktweise mit dem Außenrohr (2) fest verbunden ist und mit Ausnahme der an den Fügestellen (9; 11; 12) vorgesehenen Verbindungen mit dem Außenrohr (2) berührungsfrei zum Außenrohr (2) angeordnet ist.

6. Abgasleitungsbauteil nach einem der Ansprüche 1 bis 4,
**dadurch gekennzeichnet, dass**
das Innenrohr (8) formstabil und glatt ausgebildet ist und über den überwiegenden Teil seiner Längsausdehnung berührungsfrei zum Außenrohr (2) angeordnet ist.

7. Abgasleitungsbauteil nach einem der Ansprüche 1 bis 6,
**dadurch gekennzeichnet, dass**
das Innenrohr (8) einstückig ausgebildet ist.

8. Abgasleitungsbauteil nach einem der Ansprüche 1 bis 7,
**dadurch gekennzeichnet, dass**
das Außenrohr (2) einstückig oder zweiteilig mit einer im Bereich der Mittelquerachse (10) verlaufenden lösbaren Trennstelle ausgebildet ist.

9. Abgasleitungsbauteil nach einem der Ansprüche 1 bis 8,
**dadurch gekennzeichnet, dass**
die Fügestelle (9; 11; 12) als im Wesentlichen durchgehende Schweißnaht ausgebildet ist.

10. Abgasleitungsbauteil nach einem der Ansprüche 1 bis 8,
**gekennzeichnet durch** eine an der Fügestelle (9; 11; 12) mittels Clinchtechnik, Durchsetztechnik, Niettechnik oder nach dem Taumelpressverfahren erzielte form- und/oder kraftschlüssige Verbindung.

11. Abgasleitungsbauteil nach einem der Ansprüche 1 bis 10,
**gekennzeichnet durch** eine außerhalb eines Bereich von 30 Hz bis 100 Hz liegende Resonanzfrequenz gegenüber mechanisch angeregten Schwingungen.

## Claims

1. Exhaust duct component (1), operative as a vibration decoupling element, for installation in an exhaust system for conducting exhaust gases of a motor vehicle internal combustion engine, with an outer pipe (2) having a corrugated pipe portion (3; 4) and with an inner pipe (8) which is arranged coaxially to the outer pipe (2) and is separated therefrom by an annular gap, **characterised in that**
the outer pipe (2) has
- a central portion (5) of plain construction,
- a first corrugated pipe portion (3) and a second corrugated pipe portion (4), and
- a first end portion (6) and a second end portion (7), which are each of plain construction, and
the inner pipe (8) is rigidly attached, at least pointwise, to the outer pipe (2) by way of a circumferential joint (9) in the region of the central portion (5), the exhaust duct component (1) being rectilinear and having an at least approximately axially symmetrical construction in respect of its central transverse axis (10).

2. Exhaust duct component according to claim 1,
**characterised in that**
the first corrugated pipe portion (3) and/or the second corrugated pipe portion (4) are in the form of a wound hose having a corrugated profile.

3. Exhaust duct component according to claim 2,
**characterised in that**
the first corrugated pipe portion (3) and the second corrugated pipe portion (4) are wound in opposite directions.

4. Exhaust duct component according to any one of claims 1 to 3,
**characterised in that**
the central portion (5) is dimensionally stable.

5. Exhaust duct component according to any one of claims 1 to 4,
**characterised in that**
the inner pipe (8) is in the form of a bendable metal hose that is flexible in the longitudinal direction, which hose is rigidly attached, at least pointwise, to the outer pipe (2) by way of a circumferential joint (11; 12) in the end region of each of the end portions (6, 7) and, with the exception of the connections to the outer pipe (2) provided at the joints (9; 11; 12), is arranged contactlessly with respect to the outer pipe (2).

6. Exhaust duct component according to any one of claims 1 to 4,
**characterised in that**
the inner pipe (8) is of dimensionally stable and plain construction and over the major part of its longitudinal extent is arranged contactlessly with respect to the outer pipe (2).

7. Exhaust duct component according to any one of claims 1 to 6,
**characterised in that**
the inner pipe (8) is of one-piece construction.

8. Exhaust duct component according to any one of claims 1 to 7,
**characterised in that**
the outer pipe (2) is of one-piece construction or of two-part construction with a releasable dividing joint running in the region of the central transverse axis (10).

9. Exhaust duct component according to any one of claims 1 to 8,
**characterised in that**
the joint (9; 11; 12) is in the form of a substantially continuous welded seam.

10. Exhaust duct component according to any one of claims 1 to 8, **characterised by** an interlocking and/or force-fitting connection achieved at the joint (9; 11; 12) by means of a clinching technique, a press-joining technique, a riveting technique or in accordance with the orbital forming process.

11. Exhaust duct component according to any one of claims 1 to 10, **characterised by** a resonance frequency outside a range of from 30 Hz to 100 Hz in respect of mechanically induced vibrations.

## Revendications

1. Élément de tubulure d'échappement (1) faisant office d'élément de découplage de vibrations, à monter dans un système d'échappement pour guider les gaz d'échappement d'un moteur à combustion interne de véhicule automobile, avec un tuyau extérieur (2) présentant un tronçon de tube ondulé (3 ; 4), et avec un tuyau intérieur (8) disposé coaxialement au tuyau extérieur (2) et séparé de ce dernier par une fente annulaire,
**caractérisé en ce que** le tuyau extérieur (2) présente
- un tronçon médian (5) réalisé lisse,
- un premier tronçon de tube ondulé (3) et un second tronçon de tube ondulé (4), et
- un premier tronçon terminal (6) réalisé lisse et un second tronçon terminal (7) réalisé lisse,
et le tuyau intérieur (8) est fixement assemblé au moins ponctuellement au tuyau extérieur (2) au moyen d'un joint entourant (9) dans la région du tronçon médian (5), sachant que l'élément de tubulure d'échappement (1) est réalisé rectiligne et présente une structure au moins approximativement à symétrie axiale par rapport à son axe médian transversal (10).

2. Élément de tubulure d'échappement selon la revendication 1, **caractérisé en ce que** le premier tronçon de tube ondulé (3) et/ou le second tronçon de tube ondulé (4) sont réalisés sous forme de tuyau souple enroulé à profil ondulé.

3. Élément de tubulure d'échappement selon la revendication 2, **caractérisé en ce que** le premier tronçon de tube ondulé (3) et le second tronçon de tube ondulé (4) sont réalisés enroulés en sens contraires.

4. Élément de tubulure d'échappement selon l'une des revendications 1 à 3, **caractérisé en ce que** le tronçon médian (5) est réalisé de forme stable.

5. Élément de tubulure d'échappement selon l'une des revendications 1 à 4, **caractérisé en ce que** le tuyau intérieur (8) est réalisé sous forme de tuyau métallique souple et flexible en direction longitudinale, qui est fixement assemblé au moins ponctuellement au tuyau extérieur (2) au moyen d'un joint entourant respectif (11 ; 12) dans la région terminale des tronçons terminaux (5, 7), et qui, à l'exception des assemblages avec le tuyau extérieur (2) prévus au niveau des joints (9 ; 11 ; 12), est disposé sans contact physique avec le tuyau extérieur (2).

6. Élément de tubulure d'échappement selon l'une des revendications 1 à 4, **caractérisé en ce que** le tuyau intérieur (8) est réalisé de forme stable et lisse, et est disposé sans contact physique avec le tuyau extérieur (2) sur la majeure partie de son étendue longitudinale.

7. Élément de tubulure d'échappement selon l'une des revendications 1 à 6, **caractérisé en ce que** le tuyau intérieur (8) est réalisé d'un seul tenant.

8. Élément de tubulure d'échappement selon l'une des revendications 1 à 7, **caractérisé en ce que** le tuyau extérieur (2) est réalisé d'un seul tenant, ou en deux parties avec un point de séparation amovible s'étendant dans la région de l'axe médian transversal (10).

9. Élément de tubulure d'échappement selon l'une des revendications 1 à 8, **caractérisé en ce que** le joint (9 ; 11 ; 12) est réalisé sous forme de soudure essentiellement ininterrompue.

10. Élément de tubulure d'échappement selon l'une des revendications 1 à 8, **caractérisé par** une liaison positive et/ou à force obtenue au niveau du joint (9 ; 11 ; 12) au moyen d'une technique de rabattement, d'une technique d'entrelacement ou d'une technique de rivetage, ou par le procédé à la presse orbitale.

11. Élément de tubulure d'échappement selon l'une des revendications 1 à 10, **caractérisé par** une fréquence de résonance vis-à-vis des vibrations d'origine mécanique qui se situe en dehors d'une plage de 30 Hz à 100 Hz.
